# EUROPEAN PATENT SPECIFICATION

(11) **EP 3 126 560 B1**
(45) Date of publication and mention of the grant of the patent: **06.09.2023**
(21) Application number: 15718100.9
(22) Date of filing: 31.03.2015
(51) Int. Cl.: D06F 37/22

(54) **DEVICE FOR RADIAL DAMPING OF OSCILLATIONS FROM AN OSCILLATING UNIT OF A WASHING MACHINE, ARTICULATION DEVICE AND WASHING MACHINE THAT COMPRISES THE DAMPING DEVICE**
VORRICHTUNG FÜR RADIALE SCHWINGUNGSDÄMPFUNG AUS EINER SCHWINGENDEN EINHEIT EINER WASCHMASCHINE, GELENKVORRICHTUNG UND WASCHMASCHINE MIT DER DÄMPFUNGSVORRICHTUNG
DISPOSITIF PERMETTANT UN AMORTISSEMENT RADIAL DES OSCILLATIONS D'UNE UNITÉ D'OSCILLATIONS D'UNE MACHINE À LAVER, DISPOSITIF D'ARTICULATION ET MACHINE À LAVER QUI COMPREND LEDIT DISPOSITIF D'AMORTISSEMENT

(30) Priority: 04.04.2014 ES 201430501
(43) Date of publication of application: 08.02.2017
(73) Proprietor: BSH Hausgeräte GmbH, 81739 München (DE)
(72) Inventor: GRACIA BOBED, Ismael, E-50194 Zaragoza (ES); GRACIA CANO, Eduardo, E-50003 Zaragoza (ES); MARTINEZ PEREZ, Gerardo, E-50015 Zaragoza (ES); RECIO FERRER, Eduardo, E-50013 Zaragoza (ES)
(86) International application number: PCT/IB2015/052353
(87) International publication number: WO 2015/151020

(56) References cited:
- EP-A1- 2 281 936
- WO-A1-2011/070092
- WO-A1-2013/175363
- WO-A1-2013/175372

## Description

The present invention pertains to the technical field of washing machines and, in particular, of systems for radial damping of vibrations generated by the oscillating unit of a washing machine such as a simple washing machines or a washer-dryer.

Specifically the invention pertains to a radial damping device for oscillations of an oscillating unit of a washing machine, which comprises a lever arm with a coupling body having an internal passage, and is rotationally insertable into a support shaft fixable to a portion of a washing machine, and a frictional damping element, which is inserted into the internal passage so that when the coupling body is inserted into the support shaft, a frictional resistance opposes the rotation of the lever arm on the support shaft. In addition the invention pertains to an articulation device that includes such radial damping device, and a washing machine that includes such damping device.

A washing machine generally comprises an oscillating unit, which generally comprises a tub, a washing drum that rotates inside the tub, a motor that transmits rotational movement to the drum, a transmission that transmits the rotational movement from the motor to the drum, and counterweights fixed to the tub that define the dynamic behavior of the oscillating unit. The oscillating unit is typically suspended at the top of the frame or housing of the washing machine by means of retaining springs, and is supported by one or more, frequently three, oscillation dampers fixed to the bottom of the frame or housing.

The rotation of the drum generates, especially when accelerating or decelerating, oscillations that in turn cause forces and noise when they are transmitted to the washing machine. It is known to employ systems in order to avoid the direct transmission of these oscillations to the tub and the frame or housing, which comprise radial dampers such as those described, for example, in application WO 2011/070092 A1. Document WO 2013/175372 A1 discloses all the features belonging to the preambles of independent claims 1 and 5.

A radial damper usually comprises a support arm such as a rod, articulated above the tub and below a lever arm simultaneously articulated with a horizontal support bushing of a support fixed to the bottom of the housing. The bushing extends through an internal passage of the lever arm, and placed between the external surface of the support bushing and the internal surface of the internal passage is a radial damping element, such as a friction sponge, a friction ribbon or a friction bushing, the function of which is to provide a certain frictional resistance to the turning of the lever arm with respect to the support.

In a radial damper, axial displacement of the damping element by friction on the horizontal bushing is delimited between two stops, such as two opposing support tabs between which the support bushing extends and/or two rubber retention rings. However, this delimitation of axial displacement does not keep the damping element from being displaced by friction between respective stops, which means that vibrations from the oscillating unit transmitted to the lever arm may displace the damping element due to friction towards one or the other of the stops, which can involve a decrease in damping, greater wear by friction due to compression and/or twisting of the damping element due to friction when it is pressed against one of the stops when the lever arm swings laterally with respect to the support in one direction or the other.

In a radial damper, the damping capacity of the frictional damping element also depends on the firmness with which the damping element is retained by friction between the support bushing and the internal passage of the lever arm. This firmness may be lost with use, which leads to reductions in damping function.

The object of the present invention is to overcome the drawbacks of the prior art described above, by means of a device for radial damping of oscillations from an oscillating unit of a washing machine, as well as by means of an articulation device and a washing machine that comprise the damping device.

According to a first aspect of the invention the radial damping device for oscillations of an oscillating unit of a washing machine comprises a lever arm with a coupling body having an internal passage, and is rotationally insertable into a support shaft fixable to a portion of a washing machine, and a frictional damping element, which is inserted into the internal passage so that when the coupling body is inserted into the support shaft, a frictional resistance opposes the rotation of the lever arm on the support shaft. This damping device comprises retention elements axially provided on the frictional damping element and on the coupling body, which are associated with each other as a unit so as to retain the frictional damping element axially within the internal passage. Further, the internal passage is surrounded by an internal wall of the coupling body, has a cylindrical form and is delimited between respective open ends, the frictional damping element is a tubular element with respective free ends, an internal axial passage that extends between respective open bases each surrounded by one of the free ends, and an external wall at least partially connected to the internal wall of the coupling body, and the external wall of the frictional damping element comprises a sliding friction internal surface over a peripheral surface of support shaft, wherein the interior passage is surrounded by an internal wall of the coupling body having a cylindrical form and is delimited between respective open ends, while the frictional damping element is a tubular element with respective free ends, an internal axial passage that extends between respective open bases each surrounded by one of the free ends, and an external wall at least partially connected to the internal wall of the coupling body. The exterior wall of the frictional damping element comprises a sliding friction internal surface over a peripheral surface of the shaft wherein the retention elements comprise a plurality of arching recesses in each one of the free ends of the frictional damping element, so that each free end comprises crenellations disposed between two separate recesses, and arching projections that emerge from the internal wall in each of the end areas of the internal passage of the coupling body inside the internal passage so that the frictional damping element remains rotationally retained by its crenellations protruding between said projections.

The frictional damping element is preferably made of an elastically flexible material, such as foam or a foamed plastic, especially polyurethane.

In particular, the sliding frictional internal surface is meant to remain clamped against the peripheral surface of the shaft.

The internal surface of the frictional damping element is appropriately polished so as to eliminate and/or fill in any porosities therein, for example by means of polishing with a lubricant such as grease. A greater uniformity of friction is thereby achieved for the internal surface on the external surface of the support shaft. At least one part of the internal surface of the frictional damping element may be provided with annular furrows, which allow retaining of the lubricant in the grooves.

Each recess of each free end of the frictional damping element comprises a peripheral part that abuts one of the projections emerging from the internal wall of the coupling body so that the frictional damping element remains axially retained by its recesses between these projections.

In turn, each crenellation from a free end of the frictional damping element protrudes between each of the projections from the open ends of the internal wall of the coupling body so that the frictional damping element remains rotationally retained by its crenellations protruding between these projections.

Each projection from the coupling body may be narrower than the recess from the frictional damping element in which it is disposed, so that the frictional damping element and the coupling body can freely rotate between themselves along an arc. The arc along which they can freely rotate is preferably less than 5°, but preferably greater than 1°. More preferably, they may rotate between each other along an arc between 1° and 4°. This characteristic makes it so that at the shortest and most frequent oscillations of the washing machine oscillating unit, which are basically produced with the machine stabilized at a constant speed of the washing drum, there is a free rotation path on which the frictional damping element does not rotate on the shaft and therefore does not transmit vibrations to the washing machine housing.

The recesses of the frictional damping element are preferably equidistantly distributed on each one of the free ends of the frictional damping element, while the projections from the coupling body are equidistantly distributed on the internal wall of the coupling body.

The recesses can preferably be disposed facing the crenellations of the frictional damping element.

The recesses of one of the free ends may be disposed in a staggered pattern with respect to the recesses of the other free ends of the frictional damping element, in which case the projections from the coupling body emerging on one of the end areas of the internal passage are disposed in a staggered pattern with respect to the projections emerging in the other end areas of the internal passage of the coupling body internal passage.

Preferably and according to this first embodiment, the damping device comprises an odd number of recesses in each one of the free ends of the frictional damping element, and an odd number of projections on each one of the end areas of the internal passage of the coupling body internal passage.

According to a second aspect of the invention the damping device for oscillations of an oscillating unit of a washing machine, comprises a lever arm with a coupling body having an internal passage, and is rotationally insertable into a support shaft fixable to a portion of a washing machine, and a frictional damping element, which is inserted into the internal passage so that when the coupling body is inserted into the support shaft, a frictional resistance opposes the rotation of the lever arm on the support shaft, and retention elements axially provided on the frictional damping element and on the coupling body, which are associated with each other as a unit so as to retain the frictional damping element axially within the internal passage. Further, the internal passage is surrounded by an internal wall of the coupling body, has a cylindrical form and is delimited between respective open ends, the frictional damping element is a tubular element with respective free ends, an internal axial passage that extends between respective open bases each surrounded by one of the free ends, and an external wall at least partially connected to the internal wall of the coupling body, and the external wall of the frictional damping element comprises a sliding friction internal surface over a peripheral surface of support shaft, wherein the interior passage is surrounded by an internal wall of the coupling body having a cylindrical form and is delimited between respective open ends, while the frictional damping element is a tubular element with respective free ends, an internal axial passage that extends between respective open bases each surrounded by one of the free ends, and an external wall at least partially connected to the internal wall of the coupling body, so that the frictional damping element remains axially and rotationally retained by the axial mortises and axial ribs.

The axial mortises and axial ribs may be equidistantly distributed in a radial direction from the frictional damping element and the coupling body, that is to say angularly equidistant.

Each axial mortise may be transversely wider than the axial rib that is disposed in it, so that the frictional damping element and the coupling body can freely rotate between themselves along an arc. The arc along which they can freely rotate is preferably less than 5°, but preferably greater than 1°. More preferably, they may rotate between each other along an arc between 1° and 4°. This characteristic also makes it so that at the shortest and most frequent oscillations of the washing machine oscillating unit, which are basically produced with the machine stabilized at a constant speed of the washing drum, there is a free rotation path on which the frictional damping element does not rotate on the shaft and therefore does not transmit vibrations to the washing machine housing.

In a third embodiment of the damping device according to the present invention, compatible, for example with the second embodiment described above, the free ends of the frictional damping element are widened to form respective extensions or perimeter flanges that hold from the exterior the respective edges that surround the open bases of the internal passage of the coupling body, so that the frictional damping element remains axially retained by the perimeter flanges. In this way, the widened free ends of the frictional damping element and the edges that surround the open bases of the internal passage of the coupling body form axial retention elements.

According to this third embodiment of the damping device, a central strip emerging from the internal surface of the exterior wall of the frictional damping element can be provided, which when the radial damping device is idle, contacts the peripheral surface of the shaft. This central strip is located between respective recessed end portions of the internal surface that are only pressed against the peripheral surface of the shaft from a certain lateral tilt of the lever arm with respect to the support in one direction or another.

The frictional damping element may comprise respective annular grooves recessed in respective intermediate areas of respective halves of the internal surface of the exterior wall. In this case, each annular groove is sized so that when the lever arm tilts laterally with respect to the support and the coupling body presses the diagonally opposed free ends of the intermediate areas against the peripheral surface of the shaft, the external wall of the frictional damping element flexes between the pressed free ends and the corresponding annular groove (4f).

It follows from the above that the characteristics of the radial damping device overcome the drawbacks of the radial damping devices of the prior art, in addition to resulting in a device that is easy to fabricate, with a simple and economical structure.

The articulation device according to the present invention comprises a support fixable to a part of the washing machine, and a damping device that comprises a lever arm that comprises a coupling body with an internal passage rotationally inserted on a support shaft and a frictional damping element, preferably made of an elastically flexible material, which is inserted in the internal passage so that when the coupling body is inserted on the shaft, a frictional resistance opposes the rotation of the lever arm on the shaft, with the damping device being the radial damping device described above.

This articulation device has the advantage that it can be fabricated as a unit, for later mounting as a unit during assembly of the washing machine.

Finally, the washing machine according to the present invention comprises a housing that houses an oscillating unit that comprises an oscillating unit with a tub in which a motordriven washing drum rotates. The tub is connected with the housing at the top by means of at least one pair of sustaining springs and at the bottom through a radial damping system articulated with the housing.

The radial damping system comprises a damping device, which in turn comprises a support fixed to the housing of the washing machine, a lever arm that comprises a coupling body with an internal passage rotationally inserted on a support shaft and a frictional damping element, preferably made of an elastically flexible material, which is inserted in the internal passage.

Aspects and embodiments of the invention are described below with reference to the drawing attached, based on several figures, wherein:
- Figure 1: is a front perspective view of one embodiment of a washing machine in which supports according to the present invention can be mounted;
- Figure 2: is an elevated front view along the cross section of line A-A of the washing machine shown in Figure 1, which comprises radial damping devices according to the present invention;
- Figure 3: is a bottom-side perspective view of a first embodiment of a lever arm according to the present invention;
- Figure 4: is an elevated side view of the lever arm shown in Figure 3;
- Figure 5: is a sectional view along line B-B of the lever arm shown in Figure 4;
- Figure 6: is a sectional view along line C-C of the lever arm shown in Figure 4;
- Figure 7: is a perspective view of a ribbon from which can be obtained a first embodiment of a friction sponge according to an embodiment compatible with the embodiment of the lever arm illustrated in Figures 1 through 6;
- Figure 8: is a top view of the friction sponge obtained from the ribbon shown in Figure 7;
- Figure 9: is an elevated side view of the first free end of the friction sponge illustrated in Figure 8;
- Figure 10: is an elevated side view of the second free end of the friction sponge illustrated in Figure 8;
- Figure 11: is a bottom-side perspective view of a second embodiment of a lever arm according to the present invention;
- Figure 12: is an elevated side view of the lever arm shown in Figure 11;
- Figure 13: is a sectional view along line D-D of the lever arm shown in Figure 12;
- Figure 14: is a sectional view along line E-E of the lever arm shown in Figure 12;
- Figure 15: is a perspective view of a ribbon from which can be obtained a first embodiment of a friction sponge according to an embodiment compatible with the embodiment of the lever arm illustrated in Figures 11 through 14;
- Figure 16: is a top view of the friction sponge obtained from the ribbon shown in Figure 15;
- Figure 17: is an elevated side view of a free end of the friction sponge illustrated in Figure 16;
- Figure 18: is a longitudinal section view of a third embodiment of lever arm and a friction sponge, mounted on a support, in a position of rest;
- Figure 19: is a view of the third embodiment illustrated in Figure 18, in which the lever arm is tilted to the left with respect to the support;
- Figure 20: is a view of the third embodiment illustrated in Figure 18, in which the lever arm is tilted to the right with respect to the support;
- Figure 21: is a top view of an embodiment of a ribbon from which the friction sponge illustrated in Figure 18 can be obtained;
- Figure 22: is an elevated side view of the friction sponge illustrated in Figure 18;
- Figure 23: is a sectional view along line F-F of the friction sponge illustrated in Figure 22;
- Figure 24: is a longitudinal section view of a fourth embodiment of the friction sponge according to the present invention;
- Figure 25: is a top view of an embodiment of a ribbon from which the friction sponge illustrated in Figure 24 can be obtained;
- Figure 26: is an elevated side view of the ribbon illustrated in Figure 25;
- Figure 27: is a longitudinal section view of a lever arm as illustrated in Figures 18 through 20, with the friction sponge illustrated in Figure 24, mounted on the support shown in Figure 18, with the lever arm tilted to the left with respect to the support;
- Figure 28: is a longitudinal section view of a fifth embodiment of a friction sponge according to the present invention, mounted on a lever arm like the one that is illustrated in Figures 18 and 27.

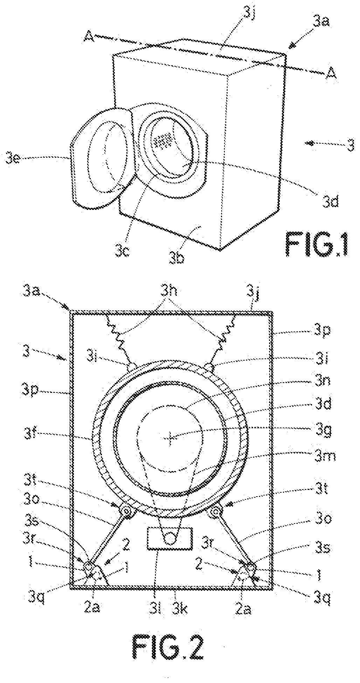

Figures 1 and 2 show an embodiment of a washing machine 3 that, in a conventional manner insofar, comprises a housing 3a that comprises a front wall 3b with a loading opening 3c that allows access to drum 3d, and that is closed through a loading door 3e, as well as a lower base 3k.

Housed inside of housing 3a is an oscillating unit comprising a tub 3f in which a drum 3d rotates, which has a front hatch facing loading opening 3c. Drum 3d is connected to a driven pulley 3n connected in turn to a drive motor 3l through a transmission belt 3m, so that drum 3d can rotate around rotation shaft 3g. Housing 3a moreover comprises a back wall (not shown in the figures), cover wall 3j, as well as respective side walls 3p. Tub 3f is suspended above in housing 3a through retaining springs 3h, which hook below onto respective hooks 3i on opposing sides of tub 3f and above on cover wall 3j of housing 3a.

As shown in Figure 2, tub 3f is supported on base 3k of housing 3a through a radial oscillations damping system that comprises two support arms 3o in the form of rods, connected below to base 3k of housing 3a through respective lever arms 1 and supports 2 anchored to base 3k of housing 3a at respective positions close to the respective lateral walls 3p of housing 3a.

In this way, the lower end of each support arm 3o is articulated with one of the lever arms 1, and each lever arm 1 is articulated with its respective support 2 through a lower articulation 3q.

Lower articulation 3q comprises shaft 2a of support 2, with a bushing shape, a coupling body 1a of lever arm 1, and a frictional damping element 4 that will be described below in detail with reference to other drawings, through which support 2 is articulated with lever arm 1, and on which bushing 2a of support 2 acts as a pivot shaft. In turn, lever arm 1 is articulated with support arm 3o through an intermediate articulation 3r with a pivot shaft 3s. In addition, each support arm 3o is articulated from above with tub 3f through an upper articulation 3t.

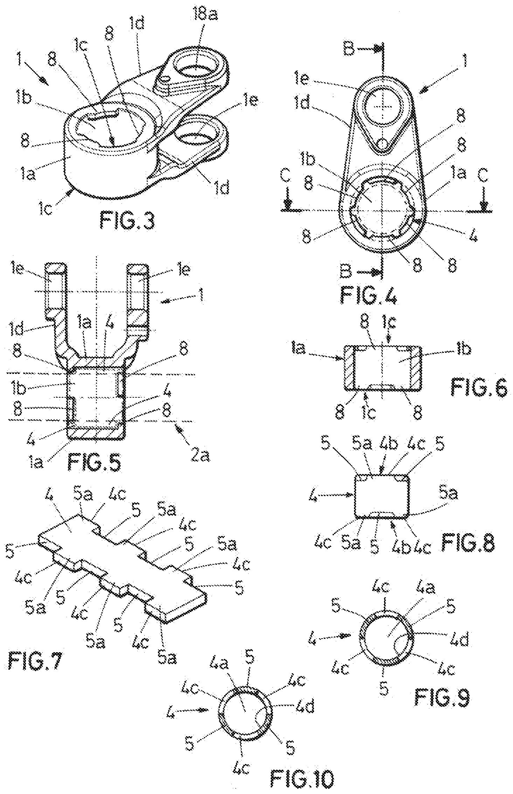

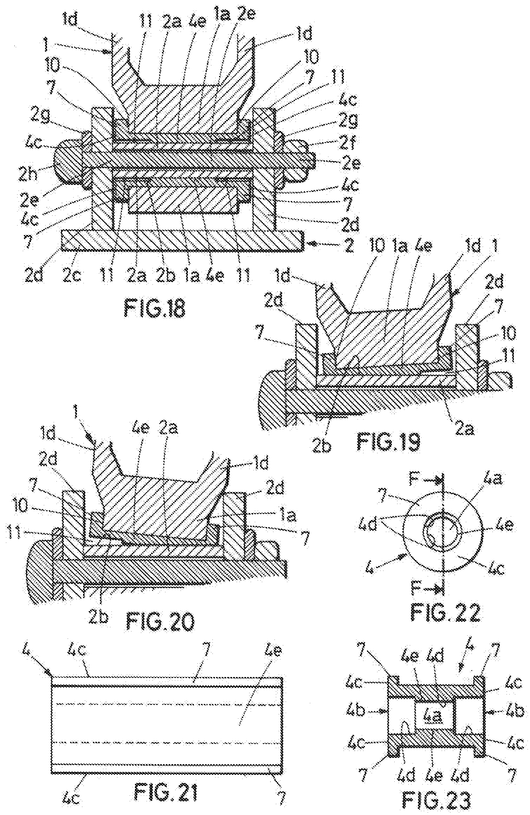

In all the embodiments illustrated in Figures 3 through 6, 11 through 14, 18 through 20, 27 and 28, lever arm 1 comprises a coupling body 1a with an internal passage 1b delimited between two lateral open ends 1c. Internal passage 1b is surrounded by an internal wall and is used to be rotationally insertable on peripheral surface 2b of bushing 2a of a support 2 (Figures 18-20, 27 and 28) to form lower articulation 3q, through which lever arm 1 is coupled to tabs 2d is coupled to support 2 (Figure 2).

Respective tabs 1d emerge laterally from corresponding lateral portions of coupling body 1a, each one of said tabs comprising a through hole 1e. Through holes 1e are coaxial with internal passage 1b of coupling body 1a and are used to house a pin through which lever arm 1 is coupled, as can be seen in Figure 2, support arm 3o by means of intermediate articulation 3r, with pivot shaft of intermediate articulation 3r forming the pin.

As shown in Figure 18, support 2 comprises a lower plate 2c through which support 2 is fixed to the washing machine housing. Two tabs 2c emerge above from lower plate 2c, between which bushing 2a is disposed, which traverses internal passage 1b of coupling body 1a. Bushing 1a is immobilized between tabs 2d of support 2 through a set of bolt 2e and nut 2f. The head 2h of bolt 2e and nut 2f hold between them the respective external surfaces of tabs 2d. Respective washers 2g are disposed between the external surface of one of the tabs 2d and the head 2h of bolt 2e, and the surface of the other tab 2d.

A frictional damping element 4, made of an elastically flexible material, is inserted in internal passage 1b of coupling body 1a of lever arm 1 such that when coupling body 1a is inserted on bushing 2a, a frictional resistance opposes the rotation of lever arm 1 on bushing 2a. Frictional damping element 4 is retained axially within internal passage 1b of coupling body 1a through retention elements.

Interior passage 1b has a cylindrical shape, while frictional damping element 4 is a tubular element with respective free ends 4c, an internal axial passage 4a that extends between respective open bases 4b each surrounded by one of the free ends 4c, and an external wall at least partially connected to the internal wall of coupling body 1a. The exterior wall of frictional damping element 4 comprises a frictional internal surface 4d meant to keep pressure against a peripheral surface of bushing 2a.

In the first embodiment of the damping device illustrated in Figures 3 through 10, retention elements are provided that comprise a plurality of arching recesses 5 in each one of free ends 4c of frictional damping element 4, so that each free end 4c comprises crenellations 5a disposed between respective recesses 5, and arching projections 8 that emerge from the internal wall in each of the end areas of internal passage 1b of coupling body 1a inside the internal passage 1b.

Each recess 5 of each free end 4c of frictional damping element 4 comprises a peripheral part that abuts one of the projections 8 emerging from the internal wall of coupling body 1a so that frictional damping element 4 remains axially retained by its recesses 5 between said projections 8.

In turn, each crenellation 5a from a free end 4c of frictional damping element 4 protrudes between each of the projections 8 from the open ends of the internal wall of coupling body 1a, so that frictional damping element 4 remains rotationally retained by its crenellations 5a protruding between said projections 8.

Each projection 8 from coupling body 1a is narrower than recess 5 of the frictional damping element 4 in which it is disposed, so that frictional damping element 4 and coupling body 1a can freely rotate between themselves along an arc between 1° and 4°. This characteristic makes it so that at the shortest and most frequent oscillations of the washing machine oscillating unit, which are basically produced with the machine stabilized at a constant speed of the washing drum, there is a free rotation path on which frictional damping element 4 does not rotate on bushing 2a and therefore does not transmit vibrations to the washing machine housing.

Recesses 5 of frictional damping element 4 are equidistantly distributed on each one of the free 4c ends of frictional damping element 4, while projections 8 of coupling body 1a are equidistantly distributed on the internal wall of coupling body 1a. Recesses 5 of one of the free ends 4c are disposed in a staggered pattern with respect to recesses 5 of the other free ends 4c of frictional damping element 4, in which case projections 8 the coupling body 1a emerging on one of the end areas of internal passage 1b are disposed in a staggered pattern with respect to projections 8 emerging on the other end areas of internal passage 1b for the internal passage 1b of coupling body 1a.

According to this first embodiment, the damping device comprises three recesses 5 in each one of the free ends 4c of frictional damping element4, and three projections 8 on each one of the end areas of internal passage 1b for internal passage 1b of coupling body 1a.

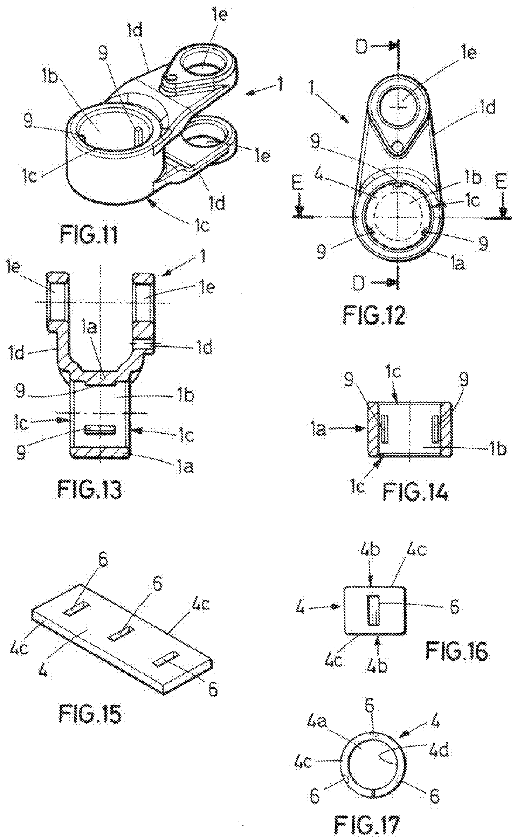

Frictional damping element 4 for this first embodiment of the damping device may be obtained by forming a cylinder from the ribbon shown in Figure 15, in which recesses 5 and crenellations 5a are preformed.

In the second embodiment of the damping device shown in Figures 11 through 17, frictional damping element 4 comprises three axial mortises 6 recessed in the exterior wall of frictional damping element 4, in which are housed respective axial ribs 9 emerging from the internal wall that surrounds internal passage 1b of coupling body 1a. Frictional damping element 4 remains axially and rotationally retained by axial mortises 6 and axial ribs 9. Axial mortises 6 and axial ribs 9 may be equidistantly distributed in a radial direction from frictional damping element 4 and the coupling body 1a.

Each axial mortise 6 is transversely wider than the axial rib 9 disposed in it, so that frictional damping element 4 and coupling body 1a can freely rotate between themselves along an arc between 1° and 4°. This characteristic also makes it so that at the shortest and most frequent oscillations of the washing machine oscillating unit, which are basically produced with the machine stabilized at a constant speed of the washing drum, there is a free rotation path on which frictional damping element 4 does not rotate on bushing 2a and therefore does not transmit vibrations to the washing machine housing.

In a third, fourth and fifth embodiment of the damping device illustrated respectively in Figures 18 through 23, 24 through 27, and 28, free ends 4c of frictional damping element 4 are widened to form respective perimeter flanges 7 that hold from the exterior respective edges 10 that surround open bases 1c of internal passage 1b of coupling body 1a, so that frictional damping element 4 remains axially retained by perimeter flanges 7. The widened free ends of the frictional damping element and the edges that surround the open bases of the internal passage of the coupling body form axial retention elements.

Frictional damping element 4 for this second embodiment of the damping device may be obtained by forming a cylinder from the ribbon shown in Figure 21, in which mortises 6 are preformed.

According to the third and fourth embodiment of the damping device, a central strip 4e emerging from internal surface 4d of the exterior wall of frictional damping element 4 is provided, which when the radial damping device is idle (Figure 18), contacts the peripheral surface 2b of bushing 2a. This central strip 4e is located between respective recessed end portions of internal surface 4a, as can be seen in Figures 19, 20 and 27, that are only pressed against peripheral surface 2b of bushing 2a from a certain lateral tilt of lever arm 1 with respect to support 2 in one direction or another.

Frictional damping element 4 for the third embodiment of the damping device can be obtained by forming a cylinder from the ribbon shown in Figure 21, on the lateral edges of which the widened ends 4c are formed, which will form perimeter flanges 7 and on a central band of which central strip 4e is preformed.

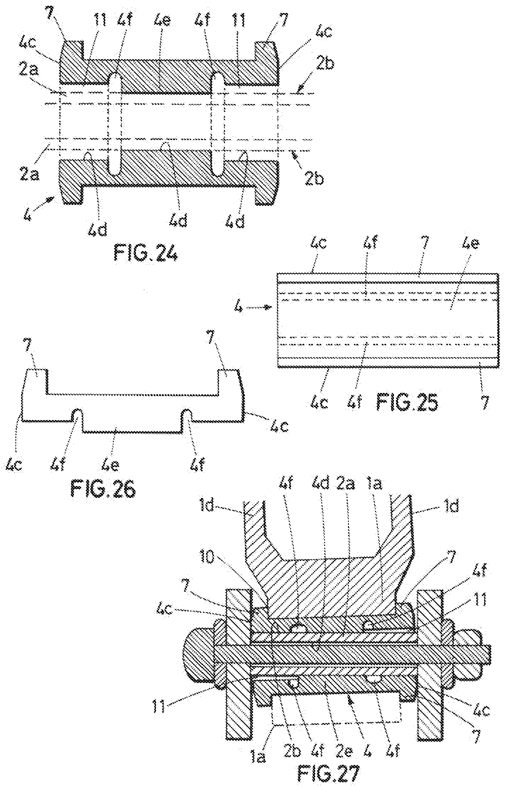

In turn, frictional damping element 4 for the implementation the damping device can be obtained by forming a cylinder from the ribbon shown in Figures 25 and 26, on the lateral edges of which the widened ends 4c are formed, which will form perimeter flanges 7, and on a central band of which central strip 4e is preformed, while adjacently to the respective sides of its central band 4e respective grooves are provided that will form annular grooves 4f.

According to the fourth embodiment of the damping device illustrated in Figures 24 through 27, frictional damping element 4 comprises respective annular grooves 4f recessed in respective intermediate areas of respective middles of internal surface 4d of the exterior wall. Each annular groove 4f is sized so that when lever arm 1 tilts laterally with respect to support 2 and coupling body 4a presses the diagonally opposed free ends 4c of the intermediate areas against peripheral surface 2b of bushing 2a, the external wall of frictional damping element 4 flexes between the pressed free ends 4c and the corresponding annular groove 4f.

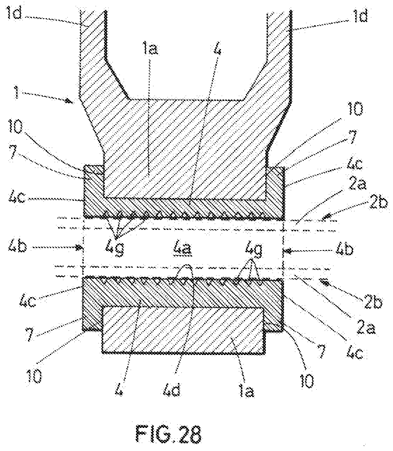

Internal surface 4d of frictional damping element 4 is polished, so as to eliminate and/or fill in any porosities therein, for example by means of polishing with a lubricant such as grease. A greater uniformity of friction is thereby achieved for the internal surface 4d on external surface 2b of bushing 2a of support 2. According to a fifth embodiment of the damping device illustrated in Figure 28, a portion of internal surface 4d of frictional damping element 4 is provided with annular furrows 4g, which make it possible to retain the lubricant, such as grease, in the furrows.
- 1: lever arm
- 1a: coupling body
- 1b: internal passage
- 1c: open ends
- 1d: tab
- 1e: through hole
- 2: support
- 2a: support shaft
- 2b: peripheral surface
- 2c: lower plate
- 2d: tab
- 2e: bolt
- 2f: nut
- 2g: washer
- 2h: bolt head
- 3: washing machine
- 3a: housing
- 3b: front wall of the housing
- 3c: loading opening
- 3d: drum
- 3e: loading door
- 3f: tub
- 3g: drum rotation shaft
- 3h: retention springs
- 3i: hooks from the springs to the tub
- 3j: cover wall
- 3k: housing base
- 3l: drive motor
- 3m: transmission belt
- 3n: driven pulley
- 3o: support arm
- 3p: side walls of the housing
- 3q: lower rotating articulation
- 3r: intermediate rotating articulation
- 3s: pivot shaft
- 3t: upper rotating articulation
- 4: frictional damping element
- 4a: internal axial passage
- 4b: open base
- 4c: free end
- 4d: internal surface
- 4e: central strip
- 4f: annular groove
- 4g: annular furrow
- 5: arching recess
- 5a: crenellation
- 6: axial mortise
- 7: perimeter flange
- 8: arching projection
- 9: axial rib
- 10: edge
- 11: annular interstice

## Claims

1. Radial damping device for oscillations of an oscillating unit of a washing machine (3), which comprises a lever arm (1) with a coupling body (1a) having an internal passage (1b), and is rotationally insertable into a support shaft (2a) fixable to a portion of the washing machine (3), a frictional damping element (4), which is inserted into the internal passage (1b) so that when the coupling body (1a) is inserted into the support shaft (2a), a frictional resistance opposes the rotation of the lever arm (1) on the support shaft (2a), and retention elements (5, 6, 7, 8, 9, 10) axially provided on the frictional damping element (4) and on the coupling body (1a), which are associated with each other as a unit so as to retain the frictional damping element (4) axially within the internal passage (1b), wherein the external wall of the frictional damping element (4) comprises a sliding friction internal surface (4d) over a peripheral surface of support shaft (2a), and wherein the internal passage (1b) is surrounded by an internal wall of the coupling body (1) that has a cylindrical form and is delimited between respective open ends (1c), and the frictional damping element (4) is a tubular element with respective free ends (4c), has an internal axial passage (4a) that extends between respective open bases (4b) each surrounded by one of the free ends (4c), and an external wall at least partially connected to the internal wall of the coupling body (1a), **characterized in that** the retention elements (5, 6, 7, 8, 9, 10) comprise a plurality of arching recesses (5) in each one of the free ends (4c) of the frictional damping element (4), so that each free end (4c) comprises crenellations (5a) disposed between respective recesses (5), and arching projections (8) that emerge from the internal wall in each of the end areas of the internal passage (1b) inside the internal passage (1b);
each recess (5) of each free end (4c) of the frictional damping element (4) comprises a peripheral part that abuts one of the projections (8) emerging from the internal wall of the coupling body (1a) so that the frictional damping element (4) remains axially retained by its recesses (5) between said projections (8);
each crenellation (5a) from a free end (4c) of the frictional damping element (4) protrudes between each of the projections (8) from the open ends of the internal wall of the coupling body (1a), so that the frictional damping element (4) remains rotationally retained by its crenellations (5a) protruding between said projections (8).

2. Radial damping device according to claim 1, **characterized in that** each projection (8) of the coupling body (1a) is narrower than the recess (5) of the frictional damping element (4) on which it is disposed.

3. Radial damping device according to claim 1 or 2, **characterized in that** recesses (5) of the frictional damping element (4) are equidistantly distributed on each one of the free ends (4c) of the frictional damping element (4); and projections (8) from the coupling body (1a) are equidistantly distributed on the internal wall of the coupling body (1a).

4. Radial damping device according to one of claims 1 through 3, **characterized in that** recesses (5) are disposed facing crenellations (5a) of the frictional damping element (4).

5. Radial damping device for oscillations of an oscillating unit of a washing machine, which comprises a lever arm (1) with a coupling body (1a) having an internal passage (1b), and is rotationally insertable into a support shaft (2a) fixable to a portion of a washing machine (3), a frictional damping element (4), which is inserted into the internal passage (1b) so that when the coupling body (1a) is inserted into the support shaft (2a), a frictional resistance opposes the rotation of the lever arm (1) on the support shaft (2a), and retention elements (5, 6, 7, 8, 9, 10) axially provided on the frictional damping element (4) and on the coupling body (1a), which are associated with each other as a unit so as to retain the frictional damping element (4) axially within the internal passage (1b), wherein the external wall of the frictional damping element (4) comprises a sliding friction internal surface (4d) over a peripheral surface of support shaft (2a), wherein the internal passage (1b) is surrounded by an internal wall of the coupling body (1) that has a cylindrical form and is delimited between respective open ends (1c), and the frictional damping element (4) is a tubular element with respective free ends (4c), has an internal axial passage (4a) that extends between respective open bases (4b) each surrounded by one of the free ends (4c), and an external wall at least partially connected to the internal wall of the coupling body (1a), whereby the radial damping device is
**characterized in that**
it comprises a plurality of recessed axial mortises (6) on the external wall of the frictional damping element (4), into which are disposed respective axial ribs (9) emerging from the internal wall that surrounds the internal passage (1b) of the coupling body (1a), so that the frictional damping element (4) remains axially and rotationally retained by the axial mortises (6) and axial ribs (9).

6. Radial damping device according to claim 5, **characterized in that** axial mortises (6) and axial ribs (9) are equidistantly distributed in the radial direction of the frictional damping element (4) and the coupling body (1a).

7. Radial damping device according to claim 5 or 6, **characterized in that** each axial mortise (6) is transversely wider than the axial rib (9) disposed in it.

8. Radial damping device according to any preceding claim, **characterized in that** free ends (4c) of the frictional damping element (4) are widened to form respective perimeter extensions (7) that hold from the exterior respective edges (10) that surround open bases (1c) of the internal passage (1b), so that the frictional damping element (4) remains axially retained by the perimeter flanges (7).

9. Radial damping device according to claim 8, **characterized in that** it comprises a central strip (4e) emerging from the internal surface (4d) of the external wall of the frictional damping element (4), which when the radial damping device is idle, contacts the peripheral surface (2b) of the support shaft (2a); the central strip (4e) is located between respective recessed end portions of the internal surface (4a) that are only pressed against the peripheral surface (2b) of the support shaft (2a) from a certain lateral tilt of the lever arm (1) with respect to support (2) in one direction or another.

10. Radial damping device according to claim 8 or 9, **characterized in that** the frictional damping element (4) comprises respective annular grooves (4f) recessed in respective intermediate areas of respective halves of the internal surface (4d) of the exterior wall; each annular groove (4f) is sized so that when the lever arm (1) tilts laterally with respect to the support (2) and the coupling body (4a) presses the diagonally opposed free ends (4c) of the intermediate areas against the peripheral surface (2b) of the support shaft (2a), the external wall of the frictional damping element (4) flexes between the pressed free ends (4c) and the corresponding annular groove (4f).

11. Radial damping device according to any preceding claim, **characterized in that** at least one portion of the internal surface (4d) of the frictional damping element (4) is provided with annular furrows (4g).

12. Articulation device that comprises a support (2) fixable to a part of the washing machine (3), and a damping device that comprises a lever arm (1) that comprises a coupling body (1a) with an internal passage (1b) rotationally inserted on a support shaft (2a) and a frictional damping element (4), which is inserted in internal passage (1b) so that when the coupling body (1a) is inserted on the support shaft (2a), a frictional resistance opposes the rotation of the lever arm (1) on the support shaft (2a), **characterized in that** the damping device is the radial damping device that is defined in any one of claims 1 through 11.

13. Washing machine that comprises a housing (3a) that houses an oscillating unit that comprises a tub (3f) in which a drum (3d) rotates, driven by a motor (3l), with the tub (3f) being connected to housing (3a) from above through at least a pair of retention springs (3h) and from below through a radial damping system articulated with the housing (3a), comprising the radial damping system of a damping device that comprises a support (2) fixed to the housing (3a) of washing machine (3), a lever arm (1) that comprises a coupling body (1a) with an internal passage (1b) rotationally inserted on a support shaft (2a) and a frictional damping element (4), which is inserted into the internal passage (1b) so that when the coupling body (1a) is inserted on the support shaft (2a), a frictional resistance opposes the rotation of the lever arm (1) on the shaft (2a), **characterized in that** the damping device is the radial damping device that is defined in any one of claims 1 through 11.

## Patentansprüche

1. Radialdämpfungsvorrichtung für Schwingungen einer Schwingeinheit einer Waschmaschine (3), die Folgendes umfasst: einen Hebelarm (1) mit einem Kopplungshauptteil (1a), der einen Innendurchgang (1b) aufweist und sich drehbar in eine Trägerwelle (2a) stecken lässt, welche sich an einem Abschnitt der Waschmaschine (3) fixieren lässt, ein Reibungsdämpfelement (4), das in den Innendurchgang (1b) gesteckt ist, so dass, wenn der Kopplungshauptteil (1a) in die Trägerwelle (2a) gesteckt ist, ein Reibungswiderstand der Rotation des Hebelarms (1) an der Trägerwelle (2a) entgegenwirkt, und Halteelemente (5, 6, 7, 8, 9, 10), die axial an dem Reibungsdämpfelement (4) und dem Kopplungshauptteil (1a) vorgesehen und als Einheit miteinander verknüpft sind und so das Reibungsdämpfelement (4) axial in dem Innendurchgang (1b) festhalten, wobei die Außenwand des Reibungsdämpfelements (4) an einer Umfangsfläche der Trägerwelle (2a) eine Gleitreibungsinnenfläche (4d) umfasst und wobei der Innendurchgang (1b) von einer Innenwand des Kopplungshauptteils (1) umgeben ist, die eine zylindrische Form aufweist und zwischen jeweiligen offenen Enden (1c) begrenzt ist, und es sich bei dem Reibungsdämpfelement (4) um ein rohrförmiges Element mit jeweiligen freien Enden (4c), einem axialen Innendurchgang (4a), der zwischen jeweiligen offenen Grundflächen (4b) verläuft, die jeweils von einem der freien Enden (4c) umgeben sind, und einer Außenwand handelt, die zumindest teilweise mit der Innenwand des Kopplungshauptteils (1a) verbunden ist, **dadurch gekennzeichnet, dass** die Halteelemente (5, 6, 7, 8, 9, 10) in jedem der freien Enden (4c) des Reibungsdämpfelements (4) mehrere gewölbte Aussparungen (5) umfassen, so dass jedes freie Ende (4c) Zapfen (5a), die zwischen jeweiligen Aussparungen (5) angeordnet sind, und gewölbte Vorsprünge (8) umfasst, die in jedem der Endbereiche des Innendurchgangs (1b) in dem Innendurchgang (1b) von der Innenwand ausgehen, jede Aussparung (5) jedes freien Endes (4c) des Reibungsdämpfelements (4) einen Umfangsteil umfasst, der an einem der Vorsprünge (8) anliegt, die von der Innenwand des Kopplungshauptteils (1a) ausgehen, so dass das Reibungsdämpfelement (4) über seine Aussparungen (5) zwischen den Vorsprüngen (8) weiter axial festgehalten wird, jeder Zapfen (5a) von einem freien Ende (4c) des Reibungsdämpfelements (4) zwischen jedem der Vorsprünge (8) von den offenen Enden der Innenwand des Kopplungshauptteils (1a) vorsteht, so dass das Reibungsdämpfelement (4) über seine zwischen den Vorsprüngen (8) vorstehenden Zapfen (5a) weiter drehfest gehalten wird.

2. Radialdämpfungsvorrichtung nach Anspruch 1, **dadurch gekennzeichnet, dass** jeder Vorsprung (8) des Kopplungshauptteils (1a) schmaler ist als die Aussparung (5) des Reibungsdämpfelements (4), auf dem er angeordnet ist.

3. Radialdämpfungsvorrichtung nach Anspruch 1 oder 2, **dadurch gekennzeichnet, dass** Aussparungen (5) des Reibungsdämpfelements (4) an jedem der freien Enden (4c) des Reibungsdämpfelements (4) in gleichen Abständen verteilt sind und vom Kopplungshauptteil (1a) ausgehende Vorsprünge (8) an der Innenwand des Kopplungshauptteils (1a) in gleichen Abständen verteilt sind.

4. Radialdämpfungsvorrichtung nach einem der Ansprüche 1 bis 3, **dadurch gekennzeichnet, dass** Aussparungen (5) so angeordnet sind, dass sie Zapfen (5a) des Reibungsdämpfelements (4) gegenüberliegen.

5. Radialdämpfungsvorrichtung für Schwingungen einer Schwingeinheit einer Waschmaschine, die Folgendes umfasst: einen Hebelarm (1) mit einem Kopplungshauptteil (1a), der einen Innendurchgang (1b) aufweist und sich drehbar in eine Trägerwelle (2a) stecken lässt, welche sich an einem Abschnitt einer Waschmaschine (3) fixieren lässt, ein Reibungsdämpfelement (4), das in den Innendurchgang (1b) gesteckt ist, so dass, wenn der Kopplungshauptteil (1a) in die Trägerwelle (2a) gesteckt ist, ein Reibungswiderstand der Rotation des Hebelarms (1) an der Trägerwelle (2a) entgegenwirkt, und Halteelemente (5, 6, 7, 8, 9, 10), die axial an dem Reibungsdämpfelement (4) und dem Kopplungshauptteil (1a) vorgesehen und als Einheit miteinander verknüpft sind und so das Reibungsdämpfelement (4) axial in dem Innendurchgang (1b) festhalten, wobei die Außenwand des Reibungsdämpfelements (4) an einer Umfangsfläche der Trägerwelle (2a) eine Gleitreibungsinnenfläche (4d) umfasst, wobei der Innendurchgang (1b) von einer Innenwand des Kopplungshauptteils (1) umgeben ist, die eine zylindrische Form aufweist und zwischen jeweiligen offenen Enden (1c) begrenzt ist, und es sich bei dem Reibungsdämpfelement (4) um ein rohrförmiges Element mit jeweiligen freien Enden (4c), einem axialen Innendurchgang (4a), der zwischen jeweiligen offenen Grundflächen (4b) verläuft, die jeweils von einem der freien Enden (4c) umgeben sind, und einer Außenwand handelt, die zumindest teilweise mit der Innenwand des Kopplungshauptteils (1a) verbunden ist,
wonach die Radialdämpfungsvorrichtung **dadurch gekennzeichnet ist, dass** sie an der Außenwand des Reibungsdämpfelements (4) mehrere ausgesparte axiale Schlitze (6) umfasst, in denen jeweilige axiale Rippen (9) angeordnet sind, die von der Innenwand ausgehen, welche den Innendurchgang (1b) des Kopplungshauptteils (1a) umgibt, so dass das Reibungsdämpfelement (4) von den axialen Schlitzen (6) und den axialen Rippen (9) weiter axial festgehalten und drehfest gehalten wird.

6. Radialdämpfungsvorrichtung nach Anspruch 5, **dadurch gekennzeichnet, dass** axiale Schlitze (6) und axiale Rippen (9) in radialer Richtung des Reibungsdämpfelements (4) und des Kopplungshauptteils (1a) in gleichen Abständen verteilt sind.

7. Radialdämpfungsvorrichtung nach Anspruch 5 oder 6, **dadurch gekennzeichnet, dass** jeder axiale Schlitz (6) in Querrichtung breiter ist als die darin angeordnete axiale Rippe (9).

8. Radialdämpfungsvorrichtung nach einem der vorhergehenden Ansprüche, **dadurch gekennzeichnet, dass** freie Enden (4c) des Reibungsdämpfelements (4) so verbreitert sind, dass sie jeweilige Umfangsansatzstücke (7) bilden, die von den jeweiligen Außenkanten (10) aus Halt bieten, welche offene Grundflächen (1c) des Innendurchgangs (1b) umgeben, so dass das Reibungsdämpfelement (4) von den Umfangsflanschen (7) weiter axial festgehalten wird.

9. Radialdämpfungsvorrichtung nach Anspruch 8, **dadurch gekennzeichnet, dass** sie einen Mittelstreifen (4e) umfasst, der von der Innenfläche (4d) der Außenwand des Reibungsdämpfelements (4) ausgeht und, wenn die Radialdämpfungsvorrichtung inaktiv ist, die Umfangsfläche (2b) der Trägerwelle (2a) berührt, sich der Mittelstreifen (4e) zwischen jeweiligen ausgesparten Endabschnitten der Innenfläche (4a) befindet, die erst ab einer bestimmten seitlichen Neigung des Hebelarms (1) in Bezug auf den Träger (2) in der einen oder der anderen Richtung an die Umfangsfläche (2b) der Trägerwelle (2a) gedrückt werden.

10. Radialdämpfungsvorrichtung nach Anspruch 8 oder 9, **dadurch gekennzeichnet, dass** das Reibungsdämpfelement (4) jeweilige Ringnuten (4f) umfasst, die in jeweiligen Zwischenbereichen jeweiliger Hälften der Innenfläche (4d) der Außenwand ausgespart sind,
jede Ringnut (4f) so bemessen ist, dass sich die Außenwand des Reibungsdämpfelements (4), wenn sich der Hebelarm (1) in Bezug auf den Träger (2) zur Seite neigt und der Kopplungshauptteil (4a) die diagonal gegenüberliegenden freien Enden (4c) der Zwischenbereiche an die Umfangsfläche (2b) der Trägerwelle (2a) drückt, zwischen den gedrückten freien Enden (4c) und der entsprechenden Ringnut (4f) biegt.

11. Radialdämpfungsvorrichtung nach einem der vorhergehenden Ansprüche, **dadurch gekennzeichnet, dass** mindestens ein Abschnitt der Innenfläche (4d) des Reibungsdämpfelements (4) mit ringförmigen Rillen (4g) versehen ist.

12. Gelenkvorrichtung, die einen an einem Teil der Waschmaschine (3) fixierbaren Träger (2) und eine Dämpfungsvorrichtung umfasst, die einen Hebelarm (1), der einen Kopplungshauptteil (1a) mit einem Innendurchgang (1b) umfasst, welcher drehbar auf eine Trägerwelle (2a) gesteckt ist, und ein Reibungsdämpfelement (4) umfasst, das in den Innendurchgang (1b) gesteckt ist, so dass, wenn der Kopplungshauptteil (1a) auf die Trägerwelle (2a) geschraubt ist, ein Reibungswiderstand der Rotation des Hebelarms (1) an der Trägerwelle (2a) entgegenwirkt, **dadurch gekennzeichnet, dass** es sich bei der Dämpfungsvorrichtung um die Radialdämpfungsvorrichtung nach einem der Ansprüche 1 bis 11 handelt.

13. Waschmaschine, die ein Gehäuse (3a) umfasst, in dem eine Schwingeinheit untergebracht ist, welche einen Laugenbehälter (3f) umfasst, in dem eine von einem Motor (31) angetriebene Trommel (3d) rotiert, wobei der Laugenbehälter (3f) von oben her über zumindest ein Paar Haltefedern (3h) und von unten her über ein gelenkig an dem Gehäuse (3a) fixiertes Radialdämpfungssystem mit dem Gehäuse (3a) verbunden ist, mit dem Radialdämpfungssystem einer Dämpfungsvorrichtung, die einen am Gehäuse (3a) der Waschmaschine (3) fixierten Träger (2), einen Hebelarm (1), der einen Kopplungshauptteil (1a) mit einem Innendurchgang (1b) umfasst, der drehbar auf eine Trägerwelle (2a) gesteckt ist, und ein Reibungsdämpfelement (4) umfasst, das in den Innendurchgang (1b) gesteckt ist, so dass, wenn der Kopplungshauptteil (1a) auf die Trägerwelle (2a) geschraubt ist, ein Reibungswiderstand der Rotation des Hebelarms (1) an der Trägerwelle (2a) entgegenwirkt, **dadurch gekennzeichnet, dass** es sich bei der Dämpfungsvorrichtung um die Radialdämpfungsvorrichtung nach einem der Ansprüche 1 bis 11 handelt.

## Revendications

1. Dispositif d'amortissement radial pour les oscillations d'une unité oscillante d'une machine à laver (3), qui comprend un bras de levier (1) avec un corps d'accouplement (1a) ayant un passage interne (1b), et est insérable en rotation dans un arbre de support (2a) pouvant être fixé à une partie de la machine à laver (3), un élément d'amortissement par frottement (4), qui est inséré dans le passage interne (1b) de sorte que lorsque le corps d'accouplement (1a) est inséré dans l'arbre de support (2a), une résistance par frottement s'oppose à la rotation du bras de levier (1) sur l'arbre de support (2a), et des éléments de retenue (5, 6, 7, 8, 9, 10) disposés axialement sur l'élément d'amortissement par frottement (4) et sur le corps d'accouplement (1a), qui sont associés les uns aux autres comme une unité de manière à retenir axialement l'élément d'amortissement par frottement (4) à l'intérieur du passage interne (1b), dans lequel la paroi externe de l'élément d'amortissement par frottement (4) comprend une surface interne de frottement de glissement (4d) sur une surface périphérique de l'arbre de support (2a), et dans lequel le passage interne (1b) est entouré par une paroi interne du corps d'accouplement (1) qui a une forme cylindrique et est délimitée entre des extrémités ouvertes respectives (1c), et l'élément d'amortissement par frottement (4) est un élément tubulaire avec des extrémités libres respectives (4c), a un passage axial interne (4a) qui s'étend entre des bases ouvertes respectives (4b) entourées chacune par l'une des extrémités libres (4c), et une paroi externe reliée au moins partiellement à la paroi interne du corps d'accouplement (1a), **caractérisé en ce que** les éléments de retenue (5, 6, 7, 8, 9, 10) comprennent une pluralité d'évidements arqués (5) dans chacune des extrémités libres (4c) de l'élément d'amortissement par frottement (4), de sorte que chaque extrémité libre (4c) comprend des créneaux (5a) disposés entre des évidements respectifs (5), et des saillies arquées (8) qui émergent de la paroi interne dans chacune des zones d'extrémité du passage interne (1b) à l'intérieur du passage interne (1b) ;
chaque évidement (5) de chaque extrémité libre (4c) de l'élément d'amortissement par frottement (4) comprend une partie périphérique qui vient en appui sur l'une des saillies (8) émergeant de la paroi interne du corps d'accouplement (1a) de sorte que l'élément d'amortissement par frottement (4) reste retenu axialement par ses évidements (5) entre lesdites saillies (8) ;
chaque créneau (5a) d'une extrémité libre (4c) de l'élément d'amortissement par frottement (4) fait saillie entre chacune des saillies (8) des extrémités ouvertes de la paroi interne du corps d'accouplement (1a), de sorte que l'élément d'amortissement par frottement (4) reste retenu en rotation par ses créneaux (5a) faisant saillie entre lesdites saillies (8).

2. Dispositif d'amortissement radial selon la revendication 1, **caractérisé en ce que** chaque saillie (8) du corps d'accouplement (1a) est plus étroite que l'évidement (5) de l'élément d'amortissement par frottement (4) sur lequel elle est disposée.

3. Dispositif d'amortissement radial selon la revendication 1 ou 2, **caractérisé en ce que** les évidements (5) de l'élément d'amortissement par frottement (4) sont répartis de manière équidistante sur chacune des extrémités libres (4c) de l'élément d'amortissement par frottement (4) ; et
les saillies (8) du corps d'accouplement (1a) sont réparties de manière équidistante sur la paroi interne du corps d'accouplement (1a).

4. Dispositif d'amortissement radial selon l'une des revendications 1 à 3, **caractérisé en ce que** les évidements (5) sont disposés en regard des créneaux (5a) de l'élément d'amortissement par frottement (4).

5. Dispositif d'amortissement radial pour les oscillations d'une unité oscillante d'une machine à laver, qui comprend un bras de levier (1) avec un corps d'accouplement (1a) ayant un passage interne (1b), et est insérable en rotation dans un arbre de support (2a) pouvant être fixé à une partie d'une machine à laver (3), un élément d'amortissement par frottement (4), qui est inséré dans le passage interne (1b) de sorte que lorsque le corps d'accouplement (1a) est inséré dans l'arbre de support (2a), une résistance par frottement s'oppose à la rotation du bras de levier (1) sur l'arbre de support (2a), et des éléments de retenue (5, 6, 7, 8, 9, 10) disposés axialement sur l'élément d'amortissement par frottement (4) et sur le corps d'accouplement (1a), qui sont associés les uns aux autres comme une unité de manière à retenir axialement l'élément d'amortissement par frottement (4) à l'intérieur du passage interne (1b), dans lequel la paroi externe de l'élément d'amortissement par frottement (4) comprend une surface interne de frottement de glissement (4d) sur une surface périphérique de l'arbre de support (2a), dans lequel le passage interne (1b) est entouré par une paroi interne du corps d'accouplement (1) qui a une forme cylindrique et est délimitée entre des extrémités ouvertes respectives (1c), et l'élément d'amortissement par frottement (4) est un élément tubulaire avec des extrémités libres respectives (4c), a un passage axial interne (4a) qui s'étend entre des bases ouvertes respectives (4b) entourées chacune par l'une des extrémités libres (4c), et une paroi externe reliée au moins partiellement à la paroi interne du corps d'accouplement (1a), grâce à quoi le dispositif d'amortissement radial est **caractérisé en ce qu'**il comprend une pluralité de mortaises axiales encastrées (6) sur la paroi externe de l'élément d'amortissement par frottement (4), dans lequel sont disposées des nervures axiales respectives (9) émergeant de la paroi interne qui entoure le passage interne (1b) du corps d'accouplement (1a), de sorte que l'élément d'amortissement par frottement (4) reste retenu axialement et en rotation par les mortaises axiales (6) et les nervures axiales (9).

6. Dispositif d'amortissement radial selon la revendication 5, **caractérisé en ce que** les mortaises axiales (6) et les nervures axiales (9) sont réparties de manière équidistante dans la direction radiale de l'élément d'amortissement par frottement (4) et du corps d'accouplement (1a).

7. Dispositif d'amortissement radial selon la revendication 5 ou 6, **caractérisé en ce que** chaque mortaise axiale (6) est transversalement plus large que la nervure axiale (9) qui y est disposée.

8. Dispositif d'amortissement radial selon l'une quelconque des revendications précédentes, **caractérisé en ce que** les extrémités libres (4c) de l'élément d'amortissement par frottement (4) sont élargies pour former des extensions de périmètre respectives (7) qui maintiennent depuis les bords extérieurs respectifs (10) qui entourent les bases ouvertes (1c) du passage interne (1b), de sorte que l'élément d'amortissement par frottement (4) reste retenu axialement par les rebords périmétriques (7).

9. Dispositif d'amortissement radial selon la revendication 8, **caractérisé en ce qu'**il comprend une bande centrale (4e) émergeant de la surface interne (4d) de la paroi externe de l'élément d'amortissement par frottement (4), qui, lorsque le dispositif d'amortissement radial est au repos, vient en contact avec la surface périphérique (2b) de l'arbre de support (2a) ;
la bande centrale (4e) est située entre des parties d'extrémité en retrait respectives de la surface interne (4a) qui ne sont plaquées contre la surface périphérique (2b) de l'arbre de support (2a) qu'à partir d'une certaine inclinaison latérale du bras de levier (1) par rapport au support (2) dans un sens ou dans l'autre.

10. Dispositif d'amortissement radial selon la revendication 8 ou 9, **caractérisé en ce que** l'élément d'amortissement par frottement (4) comprend des rainures annulaires respectives (4f) creusées dans des zones intermédiaires respectives de moitiés respectives de la surface interne (4d) de la paroi externe ;
chaque rainure annulaire (4f) est dimensionnée de sorte que lorsque le bras de levier (1) bascule latéralement par rapport au support (2) et que le corps d'accouplement (4a) presse les extrémités libres (4c) opposées en diagonale des zones intermédiaires contre la surface périphérique (2b) de l'arbre de support (2a), la paroi externe de l'élément d'amortissement par frottement (4) fléchit entre les extrémités libres pressées (4c) et la rainure annulaire correspondante (4f).

11. Dispositif d'amortissement radial selon l'une quelconque des revendications précédentes, **caractérisé en ce qu'**au moins une partie de la surface interne (4d) de l'élément d'amortissement par frottement (4) est pourvue de sillons annulaires (4g).

12. Dispositif d'articulation qui comprend un support (2) pouvant être fixé à une partie de la machine à laver (3), et un dispositif d'amortissement qui comprend un bras de levier (1) qui comprend un corps d'accouplement (1a) avec un passage interne (1b) inséré en rotation sur un arbre de support (2a) et un élément d'amortissement par frottement (4), qui est inséré dans le passage interne (1b) de sorte que lorsque le corps d'accouplement (1a) est inséré sur l'arbre de support (2a), une résistance par frottement s'oppose à la rotation du bras de levier (1) sur l'arbre de support (2a), **caractérisé en ce que** le dispositif d'amortissement est le dispositif d'amortissement radial qui est défini selon l'une quelconque des revendications 1 à 11.

13. Machine à laver comprenant un carter (3a) qui loge une unité oscillante qui comprend une cuve (3f) dans laquelle tourne un tambour (3d), entraîné par un moteur (3l), la cuve (3f) étant reliée au carter (3a) par le haut grâce à au moins une paire de ressorts de retenue (3h) et par le bas grâce à un système d'amortissement radial articulé avec le carter (3a), comprenant le système d'amortissement radial d'un dispositif d'amortissement qui comprend un support (2) fixé au carter (3a) de machine à laver (3), un bras de levier (1) qui comprend un corps d'accouplement (1a) avec un passage interne (1b) inséré en rotation sur un arbre de support (2a) et un élément d'amortissement par frottement (4), qui est inséré dans le passage interne (1b) de sorte que lorsque le corps d'accouplement (1a) est inséré sur l'arbre de support (2a), une résistance par frottement s'oppose à la rotation du bras de levier (1) sur l'arbre (2a), **caractérisé en ce que** le dispositif d'amortissement est le dispositif d'amortissement radial qui est défini selon l'une quelconque des revendications 1 à 11.
